(19) Europäisches Patentamt
European Patent Office
Office européen des brevets

(11) **EP 3 849 792 B1**

(12) **EUROPEAN PATENT SPECIFICATION**

(45) Date of publication and mention
of the grant of the patent:
**04.06.2025 Bulletin 2025/23**

(21) Application number: **19782722.3**

(22) Date of filing: **04.09.2019**

(51) International Patent Classification (IPC):
**B32B 3/08** *(2006.01)* **B32B 27/18** *(2006.01)*
**B32B 27/30** *(2006.01)* **B32B 27/32** *(2006.01)*
**B32B 27/34** *(2006.01)*

(52) Cooperative Patent Classification (CPC):
**B32B 3/08; B32B 27/18; B32B 27/306;**
**B32B 27/32; B32B 27/327; B32B 27/34;**
B32B 2250/242; B32B 2250/246; B32B 2270/00;
B32B 2307/30; B32B 2307/31; B32B 2307/40;
B32B 2307/4023; B32B 2307/516; B32B 2307/544;
(Cont.)

(86) International application number:
**PCT/IB2019/057442**

(87) International publication number:
**WO 2020/053708 (19.03.2020 Gazette 2020/12)**

(54) **RECYCLABLE PACKAGE WITH FITMENT**

RECYCLINGFÄHIGE VERPACKUNG MIT EINSATZ

EMBALLAGE RECYCLABLE AVEC ENSEMBLE BEC VERSEUR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **10.09.2018 US 201862729024 P**

(43) Date of publication of application:
**21.07.2021 Bulletin 2021/29**

(73) Proprietor: **Nova Chemicals (International) S.A.**
**1700 Fribourg (CH)**

(72) Inventors:
• **CLARE, Robert**
**Cochrane, Alberta T4C 1R8 (CA)**
• **MIRZADEH, Amin**
**Calgary, Alberta T2P 0V2 (CA)**

(74) Representative: **Mewburn Ellis LLP**
**Aurora Building**
**Counterslip**
**Bristol BS1 6BX (GB)**

(56) References cited:
WO-A1-2007/067029    WO-A1-2017/058634
US-A1- 2016 229 157

(52) Cooperative Patent Classification (CPC): (Cont.)
B32B 2307/558; B32B 2307/581; B32B 2307/72;
B32B 2307/7244; B32B 2307/75; B32B 2439/46;
B32B 2439/70

**Description**

TECHNICAL FIELD

A flexible package with an integral fitment is made from 90 to 100% polyethylene by weight, especially from 95 to 100% by weight allowing the package to be recycled.

BACKGROUND ART

It is known to prepare flexible packages having integral fitments (such as spouts or valves). The fitments may be installed using an adhesive or using heat sealing. The amount of heat required to heat seal the flexible film to the fitment is significant, and, as a result, the flexible film typically contains at least one layer of a heat resistant polymer (such as polyamide or polyester) to ensure that the film does not fail during the welding process. This makes these packages difficult to recycle because it is not possible to easily separate the polyester (or polyamide) layer form the polyethylene in current recycling facilities.

WO 2017/058634 A1 relates to fitments for flexible container derived from a polymeric material.

SUMMARY OF INVENTION

In one embodiment, the present invention provides a flexible package comprising

A) a multilayer film comprising

a) a first skin layer consisting of from 85 to 100 weight% of a high density polyethylene having a density of from 0.95 to 0.97 g/cc and a melt index, $I_2$, of from 0.5 to 10 g/10 minutes;
b) a second skin layer consisting of from 85 to 100 weight % of a first linear low density polyethylene having a molecular weight distribution Mw/Mn of from 2 to 4, a density of from 0.88 to 0.92 g/cc and a melt index, $I_2$, of from 0.3 to 5 g/10 minutes;
c) a core comprising polyethylene,

with the proviso that the polymeric material used to prepare said multilayer film is at least 90% by weight polyethylene; and
B) a fitment that is prepared from linear low density polyethylene having a density of from 0.91 to 0.93 g/cc.

In an embodiment, each of the polyethylenes used to prepare the core of multilayer films has a melt index, $I_2$, of from 0.5 to 10 and a density of from 0.91 to 0.94 g/cc with the further proviso that the polymeric material used to prepare said flexible package is at least 90% by weight polyethylene.

In another embodiment, the present invention provides a flexible package comprising

A) a multilayer film comprising

a) a first skin layer consisting of from 85 to 100 weight% of a high density polyethylene having a density of from 0.95 to 0.97 g/cc and a melt index, $I_2$, of from 0.5 to 10 g/10 minutes;
b) a second skin layer consisting of from 85 to 100 weight % of a first linear low density polyethylene having a molecular weight distribution Mw/Mn of from 2.5 to 4.0, a density of from 0.88 to 0.92 g/cc and a melt index, $I_2$, of from 0.3 to 5 g/10 minutes; and a Dilution Index, Yd, of greater than 0,
c) a core comprising polyethylene,

with the proviso that the polymeric material used to prepare said multilayer film is at least 90% by weight polyethylene; and
B) a fitment that is prepared from linear low density polyethylene having a density of from 0.91 to 0.93 g/cc with the further proviso that the polymeric material used to prepare said flexible package is at least 90% by weight polyethylene. In another embodiment, the invention provides a process to prepare the flexible packages described above by heat sealing the multilayer film to the fitment.

Conventional pouches with fitments are typically made with a multilayer film (polyester and polyethylene) that is heat sealed to a fitment made from high density polyethylene (HDPE) or polypropylene (PP). These packages are difficult to recycle because of the different materials of construction (PET + PE).

In a commonly owned patent application, a stand up pouch made with film containing at least 90% polyethylene is disclosed. Efforts to heat seal this film to fitments made from HDPE or PP on a conventional packaging machine were not successful - we observed poor seals and/or "burn through" of the film. The present invention mitigates these problems.

In the following description, the unity of thickness "mil" is used. The equivalence is 1 mil counts for 25.4 micrometer. The unity "psi" for pressure is also used, where 1 psi stands for 6894.76Pa.

BRIEF DESCRIPTION OF DRAWING

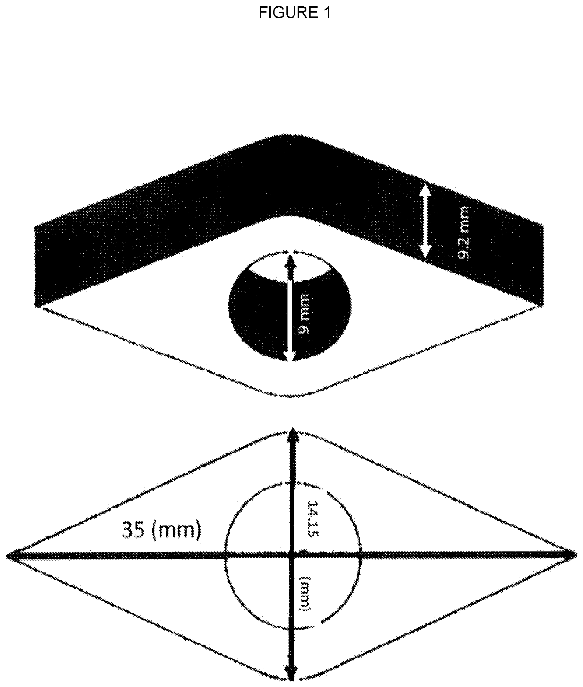

Figure 1 illustrates the fitment use in the examples.

DESCRIPTION OF EMBODIMENTS

Overview

The packages of this invention comprise two essential components, namely a multilayer polyethylene film (described in Part A, below), and a fitment that is made from a linear low density polyethylene (described in Part B, below).

PART A Multilayer Polyethylene Film

In general, the multilayer polyethylene film used to prepare the packages of this invention must include the following characteristics:

1) A skin layer made from a HDPE;
2) A second skin layer made from a sealant grade of polyethylene;
3) At least one core layer that contains polyethylene; and
4) The amount of polyethylene contained in the multilayer film is at least 90 weight% (preferably, at least 95 weight%) of the total weight of the polymers that are used to prepare the multilayer film.

In an embodiment, the fitment is made from a linear low density polyethylene having a dilution index, Yd, of greater than 0 (especially from greater than 0 to about 7).

In an embodiment, the polyethylene of the sealant layer is characterized by having a dilution index, Yd, of greater than 0 (especially from greater than 0 to about 7).

In an embodiment, both of the fitment and the sealant layer are made from a linear low density polyethylene that has a dilution index, Yd, of from 0 to about 7 (such polyethylene can be made in a dual reactor process).

In an embodiment, the multilayer film is a laminated film (Part A.1, below). In another embodiment, the multilayer film is prepared by a coextrusion process (Part A.2, below). Details of the construction of the fitment are discussed in Part B, "Fitment," below.

PART A.1 Laminated Film Structure

The laminated films or "structures" that are disclosed in U.S. patent application 2016/0229157 ("Stand Up Pouch", inventor R.H. Clare) are suitable for use in this invention. As disclosed in said patent application, suitable types of polyethylene to prepare the film include:

1) High Density Polyethylene (HDPE)--a polyethylene homopolymer or copolymer having a density of from about 0.95 to about 0.97 g/cc;
2) Medium Density Polyethylene (MDPE)--a polyethylene copolymer having a density of from about 0.93 to about 0.95 g/cc;
3) Linear Low Density Polyethylene (LLDPE)--a polyethylene copolymer having a density of from about 0.915 to about 0.93 g/cc; and
4) a sealant polyethylene--a polyethylene material that is suitable for the preparation of a heat formed seal, especially a polyethylene selected from 1) a polyethylene copolymer having a density of from about 0.88 to 0.92 g/cc ("VLDPE") and 2) a high pressure low density polyethylene (LD)--a polyethylene homopolymer prepared with a free radical initiator in a high pressure process, having a density of from about 0.91 to about 0.93 g/cc. The sealant polyethylene preferably also has a melt index, $I_2$, of from 0.3 to 5, especially 0.3 to 3 g/10 minutes.

In some embodiments, the laminated structure is prepared using two distinct webs that are laminated together.

In some embodiments, each web contains at least one layer of HDPE. The HDPE layers provide rigidity/stiffness to the SUP. These HDPE layers are separated by at least one layer of lower density polyethylene (such as LLDPE) and this lower density polyethylene provides impact and puncture resistance. In addition, by separating the layers of rigid HDPE, the overall rigidity and torsional strength of the SUP is improved in comparison to a structure that contains an equivalent amount/thickness of HDPE in a single layer--in a manner that might be referred to as an "I beam" effect (by analogy to the steel I beams that are in wide sue for the construction of buildings).

In another embodiment, the optical properties are improved by adding a nucleating agent to the HDPE. In another embodiment, the optical properties are improved through the use of Machine Direction Orientation (MDO) of the outer/print web. In this embodiment, a skin layer of the web that has been subjected to MDO becomes a skin layer of the laminated film structure. In yet another embodiment, the optical properties are improved by the use of MDO on a web that contains a layer of nucleated HDPE.

In one embodiment, the laminated structure is prepared with two webs, each of which contain at least one layer of HDPE. At least one HDPE layer in the first web is separated from at least one HDPE layer in the second web by a layer of lower density polyethylene, thereby optimizing the rigidity of the SUP for a given amount of HDPE.

In one embodiment, the two webs are laminated together.

In one embodiment, the laminated structure is printed at the interface between the two webs--i.e., either on the interior surface of the first web or on the exterior surface of the second web.

Detailed descriptions for various embodiments of the first (exterior) web; various embodiments of the second (interior) web; various embodiments of the adhesive, and various embodiments of the printing follow.

First (Exterior) Web, or "A" Web

A layer of HDPE is used as a skin in the exterior web.

In one embodiment, the first (exterior) web forms the outer wall of the laminated structure.

In one embodiment, the laminated structure is printed on the interface between the first web and the second (interior) web.

Because one "looks through" the exterior web in order to see the printing, in some embodiments, it may be desirable for the exterior web to have low haze values. In addition, in some embodiments, a high "gloss" may be desirable as many consumers perceive a high gloss finish as being an indication of high quality.

In another embodiment, the exterior web is subjected to Machine Direction Orientation (MDO) in an amount that is sufficient to improve the modulus (stiffness) and optical properties of the web.

Further descriptions of these two embodiments follow.

Multi-layer Outer Web, or Web A

In general, the use of a thick monolayer HDPE film to form the exterior web could provide a structure with adequate stiffness. However, a thick layer of HDPE may suffer from poor optical properties. This could be resolved by printing the exterior (skin) side of the outer web to form an opaque SUP. However, this design may not be very abuse resistant as the printing can be easily scuffed and damaged during transportation and handling of the SUP.

In one embodiment, these problems are mitigated by providing a coextruded multilayer film for the exterior web in which at least one skin layer ("layer A.1") is prepared from HDPE and at least one layer ("layer A.2") is prepared from a lower density polyethylene (such as LLDPE, LD or VLDPE).

In one embodiment, the HDPE is further characterized by having a melt index, $I_2$, of from 0.1 to 10 (especially from 0.3 to 3) grams/10 minutes.

In one embodiment, the LLDPE is further characterized by having a melt index, $I_2$, of from 0.1 to 5 (especially from 0.3 to 3) grams/10 minutes.

In one embodiment, the LLDPE is further characterized by being prepared using a single site catalyst (such as a metallocene catalyst) and having a molecular weight distribution, Mw/Mn (i.e., weight average molecular weight divided by number average molecular weight) of from about 2 to about 4. This type of LLDPE is typically referred to as sLLDPE (where "s" refers to the single site catalyst).

In one embodiment, the very low density polyethylene (VLDPE) is an ethylene copolymer having a density of from about 0.88 to 0.91 g/cc and a melt index, $I_2$, of from about 0.5 to 10 g/cc. All of the materials described above are well known and commercially available.

In another embodiment, the LLDPE used in web A is blended with a minor amount (from 0.2 to 10 weight %) of an LD polyethylene having a melt index, $I_2$, of from 0.2 to 5, especially from 0.2 to 0.8. Certain blends of these LLDPE and LLDPE and LD have been observed to have superior optical properties and superior stiffness in comparison to the LLDPE alone (particularly when the LLDPE is a sLLDPE).

In some embodiments, the use of an LD resin having a melt index of from about 0.2 to 0.8 grams/10 minutes has been observed to be especially effective for this purpose (and persons skilled in the art commonly refer to this type of LD resin as a "fractional melt LD").

In another embodiment, the LLDPE used in web A is blended with a minor amount (from 0.2 to 10 weight %) of an HDPE resin and a nucleating agent.

The term "nucleating agent", as used herein, is meant to convey its conventional meaning to those skilled in the art of preparing nucleated polyolefin compositions, namely an additive that changes the crystallization behavior of a polymer as the polymer melt is cooled.

Examples of conventional nucleating agents which are commercially available and in widespread use as polypropylene additives are the dibenzylidene sorbital esters (such as the products sold under the trademark MILLAD® 3988 by Milliken Chemical and IRGACLEAR® 287 by BASF Chemicals).

In some embodiments, the nucleating agents should be well dispersed in the polyethylene. In some embodiments, the amount of nucleating agent used is comparatively small--from 200 to 10,000 parts by million per weight (based on the weight of the polyethylene) so it will be appreciated by those skilled in the art that some care must be taken to ensure that the nucleating agent is well dispersed. In some embodiments, the nucleating agent in finely divided form (less than 50 microns, especially less than 10 microns) to the polyethylene to facilitate mixing.

Examples of nucleating agents which may be suitable for use include the cyclic organic structures disclosed in U.S. Pat. No. 5,981,636 (and salts thereof, such as disodium bicyclo [2.2.1] heptene dicarboxylate); the saturated versions of the structures disclosed in U.S. Pat. No. 5,981,636 (as disclosed in U.S. Pat. No. 6,465,551; Zhao et al., to Milliken); the salts of certain cyclic dicarboxylic acids having a hexahydrophtalic acid structure (or "HHPA" structure) as disclosed in U.S. Pat. No. 6,599,971 (Dotson et al., to Milliken); phosphate esters, such as those disclosed in U.S. Pat. No. 5,342,868 and those sold under the trade names NA-11 and NA-21 by Asahi Denka Kogyo and metal salts of glycerol (especially zinc glycerolate). The calcium salt of 1,2-cyclohexanedicarboxylic acid, calcium salt (CAS registry number 491589-22-1) typically provides good results for the nucleation of HDPE. The nucleating agents described above might be described as "organic" (in the sense that they contain carbon and hydrogen atoms) and to distinguish them from inorganic additives such as talc and zinc oxide. Talc and zinc oxide are commonly added to polyethylene (to provide anti-blocking and acid scavenging, respectively) and they do provide some limited nucleation functionality.

The "organic" nucleating agents described above may be better (but more expensive) nucleating agents than inorganic nucleating agents. In an embodiment, the amount of organic nucleating agent is from 200 to 2000 parts per million (based on the total weight of the polyethylene in the layer that contains the nucleating agent).

In some embodiments, these LLDPE/HDPE/nucleating agent blends have also been found to provide superior optical properties and higher modulus (higher stiffness) than 100% LLDPE.

In another embodiment, the outer web is a three layer, coextruded film of the type A/B/A where A is an HDPE and B is a lower density polyethylene, especially the LLDPE compositions described above (including the LLDPE compositions that are blends with LD and LLDPE compositions that are blends with HD and a nucleating agent). These films provide good rigidity.

### Machine Direction Orientation (MDO) of Outer Web

In another embodiment, the outer web is a multilayer, coextruded film that comprises at least one skin layer of HDPE and at least one layer of a lower density polyethylene such as MDPE or LLDPE. The structure is subjected to Machine Direction Orientation (or MDO).

A description of such structures and the preparation of the structures follow.

### MDO Web

In some embodiments, the MDO web is prepared from a multilayer film in which at least one of the layers is prepared from an HDPE composition and at least one of the layers is prepared from a polyethylene composition having a lower density than the HDPE composition.

Machine Direction Orientation (MDO) is well-known to those skilled in the art and the process is widely described in the literature. MDO takes place after a film has been formed. The "precursor" film (i.e., the film as it exists prior to the MDO process) may be formed in any conventional film molding process. Two film molding processes that are in wide commercial use (and are suitable for preparing the precursor film) are the blown film process and the cast film process.

In some embodiments, the precursor film is stretched (or, alternatively stated, strained) in the MDO process. The stretching is predominantly in one direction, namely, the "machine direction" from the initial film molding process (i.e. as opposed to the transverse direction. The thickness of the film decreases with stretching. A precursor film that has an initial thickness of 10 mils and a final thickness after stretching of 1 mil is described as having a "stretch ratio" or "draw down" ratio of 10:1 and a precursor film that has an initial thickness of 10 ml and a final thickness of 2 ml having a "stretch" or "draw down" ratio of 2:1.

In some embodiments, the precursor film may be heated during the MDO process. The temperature is typically higher than the glass transition temperature of the polyethylene and lower than the melting temperature and more specifically, is typically from about 70 to about 120°C for a polyethylene film. Heating rollers are generally used to provide this heat.

A typical MDO process utilizes a series of rollers that operate at different speeds to apply a stretching force on a film. In addition, two or more rollers may cooperate together to apply a comparison force (or "nip") on the film.

In some embodiments, the stretched film is generally overheated (i.e. maintained at an elevated temperature-- typically from about 90 to 125°C) to allow the stretched film to relax.

B. Inner Web (or "Sealant Web")

The inner web forms the inside of a package that is prepared from the laminated structure.

The inner web is a coextruded film that comprises at least three layers, namely B.1) a first layer (or interface skin layer) that is prepared from at least one polyethylene selected from LLDPE and MDPE; B.2) a core layer comprising an HDPE composition; and B.3) a sealant layer (or interior skin layer) that is prepared from a sealant polyethylene.

Further descriptions follow.

B.1 Interface Skin Layer

One skin layer of the inner web is prepared from a polyethylene composition having a lower density than HDPE so as to provide a layer having enhanced impact and tear strength properties in comparison to the layers prepared from HDPE. In one embodiment, this layer is made predominantly from an LLDPE, (including sLLDPE) having a melt index of from 0.3 to 3 grams per 10 minutes. The layer may also be prepared using a major amount of LLDPE (or sLLDPE) and a minor amount of LD (especially a fractional melt LD, as described above) or the LLDPE+HDPE+nucleating agent blend as described above.

In another embodiment, this skin layer may be prepared with MDPE (or a blend of MDPE with a minor amount of another polyethylene, such as the blends with LD; and the blends with HDPE and nucleating agent described above).

In one embodiment, this skin layer is printed. Accordingly, it is within the scope of this invention to incorporate any of the well-known film modifications that facilitate the printing process. For example, the skin layer may be subjected to a corona treatment to improve ink adhesion. In another embodiment, the skin layer may contain an opacifying agent (such as talc, titanium oxide or zinc oxide) to improve the appearance of the printed surface.

B.2 Core layer

The inner web comprises at least one core layer that is prepared from an HDPE composition.

HDPE is a common item of commerce. Most commercially available HDPE is prepared from a catalyst that contains at least one metal (especially chromium or a group IV transition metal--Ti, Zr or Hf).

HDPE that is made from a Cr catalyst typically contains some long chain branching (LCB). HDPE that is made from a group IV metal generally contains less LCB than HDPE made from a Cr catalyst.

As used herein, the term HDPE refers to a polyethylene (or polyethylene blend composition, as required by context) having a density of from about 0.95 to 0.97 grams per cubic centimeter (g/cc). In an embodiment, the melt index ("$I_2$") of the HDPE is from about 0.2 to 10 grams per 10 minutes.

In an embodiment, the HDPE is provided as a blend composition comprising two HDPEs having melt indices that are separated by at least a decade. Further details of this HDPE blend composition follow.

HDPE Blend Composition

Blend Components

Blend Component a)

Blend component a) of the polyethylene composition used in this embodiment comprises an HDPE with a comparatively high melt index. As used herein, the term "melt index" is meant to refer to the value obtained by ASTM D 1238 (when conducted at 190°C., using a 2.16 kg weight). This term is also referenced to herein as "$I_2$" (expressed in grams of polyethylene which flow during the 10 minute testing period, or "gram/10 minutes"). As will be recognized by those skilled in the art, melt index, $I_2$, is in general inversely proportional to molecular weight. In one embodiment, blend component a) has a comparatively high melt index (or, alternatively stated, a comparatively low molecular weight) in comparison to blend component b).

The absolute value of $I_2$ for blend component a) in these blends is generally greater than 5 grams/10 minutes.

However, the "relative value" of $I_2$ for blend component a) is more important and it should generally be at least 10 times higher than the $I_2$ value for blend component b) [which $I_2$ value for blend component b) is referred to herein as $I_2$']. Thus, for the purpose of illustration: if the $I_2$' value of blend component b) is 1 gram/10 minutes, then the $I_2$ value of blend component a) is preferably at least 10 grams/10 minutes.

In one embodiment, blend component a) may be further characterized by: i) having a density of from 0.95 to 0.97 g/cc; and ii) being present in an amount of from 5 to 60 weight % of the total HDPE blend composition (with blend component b) forming the balance of the total composition) with amounts of from 10 to 40 weight %, especially from 20 to 40 weight %, being generally preferred. It is permissible to use more than one high density polyethylene to form blend component a).

The molecular weight distribution [which is determined by dividing the weight average molecular weight (Mw) by number average molecular weight (Mn) where Mw and Mn are determined by gel permeation chromatography, according to ASTM D 6474-99] of component a) is preferably from 2 to 20, especially from 2 to 4. While not wishing to be bound by theory, it is believed that a low Mw/Mn value (from 2 to 4) for component a) may improve the crystallization rate and overall barrier performance of blown films and web structures.

Blend Component b)

Blend component b) is also a high density polyethylene which has a density of from 0.95 to 0.97 g/cc (preferably from 0.955 to 0.968 g/cc).

The melt index of blend component b) is also determined by ASTM D 1238 at 190°C. using a 2.16 kg load. The melt index value for blend component b) (referred to herein as $I_2$') is lower than that of blend component a), indicating that blend component b) has a comparatively higher molecular weight. The absolute value of $I_2$' is preferably from 0.1 to 2 grams/10 minutes.

The molecular weight distribution (Mw/Mn) of component b) is not critical to the success of this invention, though a Mw/Mn of from 2 to 4 is preferred for component b).

Finally, the ratio of the melt index of component b) divided by the melt index of component a) is preferably greater than 10/1.

Blend component b) may also contain more than one HDPE resin.

Overall HDPE Blend Composition

The overall high density blend composition is formed by blending together blend component a) with blend component b). In an embodiment, this overall HDPE composition has a melt index (ASTM D 1238, measured at 190°C. with a 2.16 kg load) of from 0.5 to 10 grams/10 minutes (preferably from 0.8 to 8 grams/10 minutes).

The blends may be made by any blending process, such as: 1) physical blending of particulate resin; 2) co-feed of different HDPE resins to a common extruder; 3) melt mixing (in any conventional polymer mixing apparatus); 4) solution blending; or, 5) a polymerization process which employs 2 or more reactors.

A suitable HDPE blend composition may be prepared by melt blending the following two blend components in an extruder: from 10 to 30 weight % of component a): where component a) is an HDPE resin having a melt index, $I_2$, of from 15 to 30 grams/10 minutes and a density of from 0.95 to 0.97 g/cc with, from 90 to 70 weight % of component b): where component b) is an HDPE resin having a melt index, $I_2$, of from 0.8 to 2 grams/10 minutes and a density of from 0.95 to 0.97 g/cc.

An example of a commercially available HDPE resin which is suitable for component a) is sold under the trademark SCLAIR® 79F, which is an HDPE resin that is prepared by the homopolymerization of ethylene with a conventional Ziegler Natta catalyst. It has a typical melt index of 18 grams/10 minutes and a typical density of 0.963 g/cc and a typical molecular weight distribution of about 2.7.

Examples of commercially available HDPE resins which are suitable for blend component b) include (with typical melt index and density values shown in brackets): SCLAIR 19G (melt index=1.2 grams/10 minutes, density=0.962 g/cc); MARFLEX® 9659 (available from Chevron Phillips, melt index=1 grams/10 minutes, density=0.962 g/cc); and ALATHON® L 5885 (available from Equistar, melt index=0.9 grams/10 minutes, density=0.958 g/cc).

In some embodiments, the HDPE blend composition is prepared by a solution polymerization process using two reactors that operate under different polymerization conditions. This provides a uniform, in situ blend of the HDPE blend components. An example of this process is described in U.S. Pat. No. 7,737,220 (Swabey et al.).

In one embodiment, the HDPE composition is prepared using only ethylene homopolymers. This type of composition is especially suitable if it is desired to optimize (maximize) the barrier properties of the structure.

In another embodiment, the HDPE composition may be prepared using copolymers as this will enable some improvement in the physical properties, especially impact resistance. In yet another embodiment, a minor amount (less than 30 weight %) of a lower density polyethylene may be blended into the HDPE composition (as again, this can enable some improvement in impact resistance).

In an embodiment, the HDPE blend composition described above is combined with an organic nucleating agent (as previously described) in an amount of from about 300 to 3000 parts per million by weight, based on the weight of the HDPE blend composition. The use of (previously described) calcium salt of 1,2-cyclohexane dicarboxylic acid, calcium salt (CAS 491589-22-1) is especially suitable. It is preferred to use an HDPE composition that is prepared with a group IV transition metal (especially Ti) when the HDPE composition contains a nucleating agent.

This type of "nucleated" core layer has been observed to provide outstanding barrier properties (i.e., reduced transmission of water, gas, and grease), which is desirable for many packaging applications.

In some embodiments, the presence of the nucleating agent has been observed to improve the modulus of the HDPE layer (in comparison to a non-nucleated layer of equivalent thickness).

The use of a nucleated HDPE blend composition of the type described above provides a "barrier" to oxygen and water transmission. The performance of this barrier layer is suitable for many goods. However, it will be recognized by those skilled in the art that improved "barrier" performance can be achieved through the use of certain "barrier" polymers such as ethylene-vinyl-alcohol (EVOH); ionomers and polyamides. The use of large amounts of such non-polyethylene barrier resins can make it very difficult to recycle films/structures/SUP that are made with the combination of polyethylene and non-polyethylene materials. However, it is still possible to recycle such structures if low amounts (less than 10 weight %, especially less than 5 weight %) of the non-polyethylene materials.

It will also be recognized by those skilled in the art that, in some embodiments, the use of certain non-polyethylene barrier resins may require the use of a "tie layer" to allow adhesion between the non-polyethylene barrier layer and the remaining layers of polyethylene.

B.3 Sealant Layer

The interior web has two exterior layers, or "skin" layers, namely the interface skin layer (layer B.1, above) and the interior skin layer (also referred to herein as the sealant layer. The sealant layer is prepared from a "sealant" polyethylene-- i.e., a type of polyethylene that readily melts and forms seals when subjected to sealing conditions. Those skilled in the art will recognize that two types of polyethylene are preferred for use as sealants, namely: polyethylene copolymers having a density of from about 0.88 to 0.92 g/cc; and LD polyethylene (as previously described).

In some embodiments, the use of lower density polyethylene copolymers is preferred. As a general rule, the cost of these lower density polyethylene's increases as the density decreases, so the "optimum" polyethylene sealant resin will typically be the highest density polyethylene that provides a satisfactory seal strength. A polyethylene having a density of from about 0.900 to 0.912 g/cc will provide satisfactory results for many applications.

Other examples of sealant polyethylenes include ethylene-vinyl acetate (EVA) and "ionomers" (e.g., copolymers of ethylene and an acidic comonomer, with the resulting acid comonomer being neutralized by, for example, sodium, zinc or lithium; ionomers are commercially available under the trademark SURLYN).

The use of EVA and/or ionomers is less preferred because they can cause difficulties when the SUP is recycled (however, as previously noted, some recycling facilities will accept a SUP that contains up to 10% of EVA or ionomer and recycle the SUP as if it were constructed from 100% polyethylene).

Printing Process

As previously noted, in some embodiments, the laminated structure may be printed at the interface between the two webs. Suitable processes include the well-known flexographic printing and roto gravure printing techniques, which typically use nitro cellulose or water based inks.

Lamination/Fabrication Process

One step in the fabrication of the laminated structure requires the lamination of the first web to the second web. There are many commercially available techniques for the lamination step, including the use of a liquid glue (which may be solvent based, solventless, or water based); a hot melt glue, and thermal bonding.

In one embodiment, the inner web B has a total thickness that is about twice that of the outer web A.

For example, the outer web A may have a thickness of from about 1 to about 1.4 mils and the inner web may have a thickness of from about 2 to about 3 mils.

In a specific embodiment, the outer web consists of an exterior skin layer made from HDPE (having a thickness of, for example, about 0.8 mils) and a layer of LLDPE having a thickness of, for example, about 0.4 mils. In this embodiment, the inner layer may be an A/B/C structure where layer A is made from LLDPE (having a thickness of, for example, about 0.4 mils; layer B is nucleated HDPE (having a thickness of, for example, about 1.5 mils) and layer C is sealant resin (such as VLDPE) having a thickness of, for example, about 0.3 mils.

It will be recognized by those skilled in the art that the above described thickness may be easily modified to change the physical properties of the SUP. For example, the thickness of the HDPE layers may be increased (if it is desired to produce a stiffer SUP) or the thickness of the LLDPE layer(s) may be increased to improve impact resistance.

The total thickness of the laminated structure (i.e., outer web and inner web) is about 3 to about 4 mils in one embodiment.

Part A.2 Coextruded Film Structure

In an embodiment, the multilayer film that is used to prepare the package is prepared by a coextrusion process. The laminated film structure described in Part A.1 above and the coextruded film structures generally use the same (or very similar) materials of construction, with the main difference between the two types of film structures being that the "coextruded" structures do not require a lamination step - instead, all of the film layers are coextruded. The "laminated" films can provide enhanced print quality and improved scuff resistance. However, the coextruded films do not require the "lamination" step and hence are generally less expensive to prepare than laminated films. In addition, the total thickness of the coextruded film structure can be essentially the same as the total thickness of the laminated structure (and the thickness of the layers in both structures can be essentially the same).

Part B LLDPE Fitment

B.1 Shape

This invention is not intended to be limited to the use of any particular size or shape of fitment. In general, flexible packages having integral fitments tend to have size ranges from a few tens of millimeters at the small end to about 30 liters at the large end. The fitment size generally is proportional to the size of the package - i.e. smaller fitments are used with smaller packages and larger fitments are used with larger packages. The size of the fitment opening (which allows the contents of the package to be removed from it) will also generally be proportional to the package size - although it is also well known to use larger openings for packages that contain solids and/or viscous liquids or slurries (in comparison to smaller diameter fitments that may be used with non viscous liquids such as soft drinks).

The fitment may contain a valve to control flow of a liquid from the pouch. More commonly, the fitment will have a threaded connection that cooperates with a threaded cap or closure.

The fitment may be designed to improve the sealability of the fitment to the film and/or the strength of the fitment. Common examples of such fitments include "shoulders" around the fitment opening - and "ribs" along the depth of the fitment. One type of fitment is referred to as a "canoe" because a top view of the fitment resembles the shape of a canoe - the use of this type of fitment is illustrated in the examples.

A "ribbed canoe" fitment has two or more ribs that run the outside length of the canoe - with the ribs being at different depths from the top of the canoe. Non limiting examples of fitments are described in U.S. Patents 9,963,270; 9,957,148; 9,771,174; 9,688,447; 8,613,548; and 9,635,965.

B.2 Materials of Construction

The fitment of this invention must be made from LLDPE having a density of from 0.88 to 0.93 g/cc - especially from 0.91 to 0.93 g/cc. The melt index, $I_2$, of the LLDPE used to prepare the fitment may be from 0.2 to about 150. In general, the $I_2$ of the LLDPE used to prepare the fitment may be higher than the $I_2$ of the polyethylenes used to prepare the film. In an embodiment, the LLDPE used to prepare the fitment may have a melt index, $I_2$, of from 0.2 to 50 (especially from 0.2 to 20) g/10 minutes. Such LLDPE may be prepared by the copolymerization of ethylene with at least one alpha olefin comonomer (especially butene-1; hexene-1 and/or octene-1). The LLDPE may have a "homogenous" branch distribution (i.e. having an SCBDI of from 70 to 100) or a "heterogeneous" branch distribution (i.e. having an SCBDI of less than 70).

In an embodiment, the LLDPE has a Dilution Index, Yd, of greater than 0 (especially greater than 0 to 7). Such LLDPE may be prepared in a dual reactor polymerization process as described in U.S. Patent 9,512,282 (Li et al. to NOVA Chemicals). The method to determine/measure Dilution Index, Yd, is described in U.S. Patents 9,512,282 and 10,035,906.

B.3 Welding the Film to the Fitment

The present invention is not intended to be limited to the use of any particular welding (heat sealing) technique. Common/conventional techniques, such as those described in the U.S. Patents referred to in Part B.1 above, are generally suitable. Also, ultrasonic and laser sealing technique can be used.

B.4 Fitment Making

The fitments of this invention must be made from a linear low density polyethylene (LLDPE) having a density of from 0.91 to 0.93 g/cc. This type of LLDPE is a well-known item of commerce. Typical commercially available, LLDPE is a copolymer of ethylene and one alpha olefin comonomer selected from the group consisting of butene-1; hexene-1 and octene-1 (and it is also known to use mixtures of more than one of these comonomers to prepare LLDPE).

In an embodiment, the LLDPE has a melt index, "$I_2$", (as determined by ASTM D1923 at 190°C with a 2.16 kg load) of from 0.2 to 20 grams per 10 minutes).

In general, the LLDPE may be prepared in any type of polymerization process (such as a gas phase; slurry; or solution process) using any suitable type of catalyst, including "homogenous" catalysts (also referred to as "single site" catalysts) or heterogenous catalysts.

Metallocene catalysts are well known "homogeneous" catalysts. Ziegler Natta catalyst are well known heterogeneous catalysts. The resulting LLDPE may have a "homogeneous" comonomer incorporation (as indicated by having a Short Chain Branching Distribution Index, or SCBDI, of greater than 70%) or a "heterogeneous" comonomer distribution. It is also known to prepare LLDPE in a multi-reactor process in which a homogeneous catalyst is used in one reactor and a heterogeneous catalyst is used in another - and such LLDPE is suitable for use in this invention.

Dilution Index, Yd, is based on rheological measurements. In addition to having molecular weights, molecular weight distributions and branching structures, blends of ethylene polymers may exhibit a hierarchical structure in the melt phase. In other words, the ethylene polymer components may be, or may not be, homogeneous down to the molecular level depending on polymer miscibility and the physical history of the blend. Such hierarchical physical structure in the melt is expected to have a strong impact on flow and hence on processing and converting; as well as the end-use properties of manufactured articles. The nature of this hierarchical physical structure between ethylene polymers can be characterized by Yd. The determination of Dilution Index, Yd, is described in U.S. Patent 9,512,282 ("Dilution Index"). Yd values greater than 0, especially from greater than 0 to 7, are used in an embodiment.

The branching distribution in ethylene copolymers may be defined using the so called short chain branching distribution index (SCBDI). Polyethylene copolymers that are prepared with a metallocene catalyst generally have a narrow branching distribution (which corresponds to a high SCBDI value). SCBDI is defined as the weight % of the polymer that has a comonomer content with 50% of the median comonomer content of the polymer. SCBDI is determined according to the method described in U.S. Pat. No. 5,089,321 (Chum et al.). SCBDI of from about 70 to about 100, may be used to define/describe a "narrow branching distribution" in an ethylene copolymer.

EXAMPLES

These examples illustrate packages made from a multilayer polyethylene film and a fitment made from LLDPE. In all cases, the multilayer polyethylene film had:

  1) a skin layer made from HDPE:
  2) a second skin layer made from a sealant grade of polyethylene;
  3) a core layer comprising polyethylene; and
  4) the amount of polyethylene used in the multilayer film was greater than 90 weight% of the total weight of the polymer used to prepare the multilayer film.

It will be recognized by those skilled in the art that conventional flexible packages with an integral fitment are typically made by heat sealing a flexible polymer film to the fitment, and that the fitment is typically made from HDPE or polypropylene. The use of HDPE or polypropylene to prepare the fitments is desirable because these polymers are comparatively inexpensive and because they have high stiffness (which helps the fitments to resist deformation during the heat sealing process). However, our attempts to heat melt the above described multilayer films to a fitment made form HDPE were not successful.

Comparative Example

A multilayer polyethylene film (as described above) was used in this example. Attempts were made to seal this film to a fitment made from HDPE on a conventional machine.

Different ranges of sealing time, temperature and pressure were used. In general, two different failures were observed:

  a) a failure to form a seal between the film - this type of failure is believed to be a result of either i) a sealing temperature that is too low ii) a sealing time that is too low; iii) a sealing pressure that is too low, or some combination of i) - iii);

b) a failure of the film that is referred to by those skilled in the art as "burn through" - this type of failure is believed to be a result of either i) a sealing temperature that is too high; ii) a sealing time that is too long; iii) a sealing pressure that is too high, or some combination of i) - iii).

Inventive Examples

Multilayer Film (or Recyclable Film)

The multilayer film used in the examples (also referred to as "recyclable" film for convenience) is a laminated film that was prepared in accordance with known/published techniques. The film has an outer web that is laminated to a sealant web. The compositions of the webs are described below.

• Outer web is 3 layers at total thickness of 1.15mil
(0.4mil of PE1 /0.35mil of PE1/0.4mil of PE2
• Sealant web is 3 layers at total thickness of 2.35mil
(0.4mil of PE2/1.5mil of PE3/0.45mil of PE4)

For clarity, the total thickness of the outer web is 1.15 mils and is made of three layers (having respective thickness of 0.4 mils, 0.35 mils and 0.4 mils). This outer web was made by coextrusion of the three layers.
The sealant web was also made by a three layer coextrusion - with the thickness of the sealant web being 2.35 mils (and the layers having thickness values of 0.4; 1.5 and 0.45 mils, respectively). The laminated film was made by laminating the above two webs together using a conventional adhesive. The following types of polyethylene were used (in the amounts and places indicated above).

PE1 = polymer homopolymer; melt index $I_2$ = 1 g/10 minutes; density = 0.958 g/cc (sold as SCLAIR 19C by NOVA Chemicals);
PE2 = ethylene-hexene copolymer; melt index $I_2$ - 0.8 g/10 minutes; density = 0.954 g/cc (sold as NOVAPOL® 534 by NOVA Chemicals);
PE3 = nucleated blend of ethylene homopolymers; melt index $I_2$ = 1.2 g/10 minutes; density = 0.967 g/cc (sold as SURPASS® HPs 167 by NOVA Chemicals);
PE4 = ethylene-octene copolymer; melt index = 0.9 g/10 minutes; density = 0.914g/cc; Dilution Index, Yd, = 3.4; (prepared in a dual reactor process, sold as SURPASS VPsk914 by NOVA Chemicals)

Fitment

Figure 1 illustrates the fitment that was used in these examples. The fitment may be described as being "canoe" shaped, to employ a term that is commonly used by those skilled in the art. The length of the fitment is 35 mm; the width of the fitment (at the widest part of the "canoe") is 14.15 mm; the thickness is 9.2 mm and the circular hole in the fitment has a diameter of 9 mm.
Fitments made from LLDPE were prepared. The LLDPEs used have the following characteristics:

LLDPE1: melt index = 20 g/10 minutes; density = 0.92 g/cc; (NOVAPOL PI 2024)
LLDPE2: melt index = 52 g/10 minutes; density = 0.92 g/cc. (SCLAIR 2114)
sLLDPE1: melt index 4 g/10 minutes; density 0.912 g/cc. (Ex-VPS412 sLLDPE Resin)
sLLDPE2: melt index 4.5 g/10 minutes; density 0.917 g/cc. (FPS417 sLLDPE Resin)
sLLDPE3: melt index 0.85 g/10 minutes; density 0.913 g/cc.(VPsK914 sLLDPE Resin)
sLLDPE4: melt index 0.85 g/10 minutes; density 0.921 g/cc.(SPsK919 sLLDPE
Resin)HDPE1: melt index =51 g/10 minutes; density 0.95 g/cc (for comparison purposes). (SCLAIR 2714)
HDPE2: melt index =17.2 g/10 minutes; density 0.95 g/cc (for comparison purposes). (SCLAIR 2710)
LLPDE1 is sold under the name NOVAPOL 2024; HDPE2 is sold under the name SCLAIR 2710 and both are commercially available from NOVA Chemicals Corporation.

These fitments were then heat sealed to the multilayer film previously described in a sealing machine that allows sealing temperature and sealing time to be varied. The sealing pressure was held constant at 3 bars for these experiments. Table 1 provides a summary of sealing times and temperatures that are required to produce good seals between the film and the LLDPE fitment. For clarity: Table 1 shows that a good seal strength was obtained using a minimum sealing time of 5 seconds at 120°C or for a minimum sealing time of 2 seconds at 140°C or for a minimum sealing time of 0.75 second at 160 1°C at 3 bars of pressure. However, higher temperatures (above 160°C) caused excessive softening of the film structure in less than 1 second, leading to unacceptable packages (noted with the "*" symbol). Acceptable seal strength cannot be achieved between the film and the HDPE fitment at 120°C or at 140°C and less than 8 seconds sealing time or 160°C at 4 seconds. Again, high temperature and/or high sealing time leads to excessive softening of film structure causing the package failure.

sLLDPE1 produced proper seal using a sealing time of 2 seconds at 120°C, or in less than 1 second at 140°C.

Inventive Examples Part 2

The inventive examples described above illustrate that good seals may be produced between the recyclable multilayer film and a fitment made from LLDPE. This is a highly desirable result because it allows the manufacture of a "recyclable" flexible package with a fitment (and, as noted, prior attempts to head weld the recyclable film of this invention to a fitment made from HDPE in a commercial packaging machine were not successful).

The example illustrates a set of experiments that were completed in order to develop a surface response model that describes the seal strength. Conventional Design of Experiments (DOE) software was used to choose the experiments and sealing conditions. For convenience, a flat plaque (the flexural modulus specimen) was used as a proxy (substrate) for the fitment - i.e. heat seals were formed between the recyclable film used in the experiments and flat plaques that were made from the above-mentioned LLDPEs (instead of fitments made from the same LLDPEs). The use of a flat plaque is convenient because it simplifies the sealing machinery and because it facilitates the testing of the strength of the seal. The sealed samples were then tested for seal strength using a Universal Testing Machine.

Table 3 illustrates data that describe the seals that were formed between the recyclable film and LLDPE1 (NOVAPOL 2024).

Table 4 illustrates data that describe the seals that were formed between the recyclable film and LLDPE2 (SCLAIR 2114).Table 5 illustrates data that describe the seals that were formed between the recyclable film and sLLDPE1 (Ex-VPS412 sLLDPE Resin).

Table 6 illustrates data that describe the seals that were formed between the recyclable film and sLLDPE2 (FPS417 sLLDPE Resin).

Table 7 illustrates data that describe the seals that were formed between the recyclable film and sLLDPE3 (VPsK914 sLLDPE Resin).

Table 8 illustrates data that describe the seals that were formed between the recyclable film and LLDPE4 (SPsK919 sLLDPE Resin).

Table 9 illustrates data that describe the seals that were formed between the recyclable film and HDPE1 (SCLAIR 2714).

Table 10 illustrates data that describe the seals that were formed between the recyclable film and HDPE1 (SCLAIR 2710).

TABLE 1

| Required Sealing Time to Have a Good Seal Strength Between the Film and the Fitment | | | |
|---|---|---|---|
| Temperature | HDPE1 fitment | LLDPE1 fitment | sLLDPE1 fitment |
| 120°C | N/A | 5 (s) | 2 (s) |
| 140°C | 8 (s) | 2(s) | 1 (s) |
| 160°C | 4 (s) | 0.75 (s) | <0.75 |
| 170°C (Excessive softening of film structure)* | 2 (s) | < 0.75(s) | <<0.75 |
| 180°C (Excessive softening of film structure)* | 2 (s) | < 0.75(s) | <<0.75 |
| 190°C (Excessive softening of film structure)* | 2 (s) | < 0.75(s) | <<0.75 |
| 200°C (Excessive softening of film structure)* | 1.5 (s) | < 0.75(s) | <<0.75 |

Symbolic Representation of the Data in TABLE 1

*Seal Status Between Proxy Fitment and the Film (✓: Proper seal, X: improper seal).*

| Temperature | 0.75 (s) | 1 (s) | 1.5 (s) | 2 (s) | 3 (s) | 4 (s) | 5 (s) | 6 (s) | 7 (s) | 8 (s) | 10 (s) | 15 (s) |
|---|---|---|---|---|---|---|---|---|---|---|---|---|
| 120°C (sLLDPE1) | X | X | X | ✓ | ✓ | ✓ | ✓ | ✓ | ✓ | ✓ | ✓ | ✓ |
| 140°C (sLLDPE1) | X | ✓ | ✓ | ✓ | ✓ | ✓ | ✓ | ✓ | ✓ | ✓ | ✓ | ✓ |
| 160°C (sLLDPE1) | ✓ | ✓ | ✓ | ✓ | ✓ | ✓ | ✓ | ✓ | ✓ | ✓ | ✓ | ✓ |
| 120°C (LLDPE1) | X | X | X | X | X | X | ✓ | ✓ | ✓ | ✓ | ✓ | ✓ |
| 140°C (LLDPE1) | X | X | X | ✓ | ✓ | ✓ | ✓ | ✓ | ✓ | ✓ | ✓ | ✓ |
| 160°C (LLDPE1) | ✓ | ✓ | ✓ | ✓ | ✓ | ✓ | ✓ | ✓ | ✓ | ✓ | ✓ | ✓ |
| 120°C(HDPE1) | X | X | X | X | X | X | X | X | X | X | X | X |
| 140°C(HDPE1) | X | X | X | X | X | X | X | X | X | ✓ | ✓ | ✓ |
| 160°C(HDPE1) | X | X | X | X | X | ✓ | ✓ | ✓ | ✓ | ✓ | ✓ | ✓ |
| 170°C(HDPE1) * | X | X | X | ✓ | ✓ | ✓ | ✓ | ✓ | ✓ | ✓ | ✓ | ✓ |
| 180°C(HDPE1)* | X | X | X | ✓ | ✓ | ✓ | ✓ | ✓ | ✓ | ✓ | ✓ | ✓ |
| 190°C(HDPE1)* | X | X | X | ✓ | ✓ | ✓ | ✓ | ✓ | ✓ | ✓ | ✓ | ✓ |
| 200°C(HDPE1)* | X | X | ✓ | ✓ | ✓ | ✓ | ✓ | ✓ | ✓ | ✓ | ✓ | ✓ |

The seal failure modes were also reported to calculate the 'seal score' in different sealing conditions for each resin.

TABLE 2

| Failure Mode | Failure Mode Value |
|---|---|
| Even Peel (Undesirable failure mode in industry) | 0.1 |
| Peel and stretch | 1 |
| Tensile failure (Most desirable failure mode in industry) | 2 |

Based on the values defined in Table 2, seal score data were calculated using the following equation;

$$Seal\ score = (P \times 0.1 + S \times 1 + T \times 2)\ when\ P + S + T = 5$$

Where P is the number of samples failed in "even peel" mode, S is the number of samples failed in "peel and stretch mode" and T is the number of samples failed in "tensile failure mode". Higher seal scores are desirable. Seal score data are also reported in Tables 3-10.

TABLE 3

| Seal Strength and Seal Score of LLDPE1 Resin | | | | | | |
|---|---|---|---|---|---|---|
| Run | Temperature (°C) | Pressure (psi) | Time (s) | Resin | Average Seal Strength (N) | Seal Score |
| 1 | 160 | 40 | 1.5 | LLDPE1 | 7.06 | 0.5 |
| 2 | 160 | 40 | 2.5 | LLDPE1 | 23.56 | 7 |
| 3 | 165 | 20 | 1.5 | LLDPE1 | 9.52 | 0.5 |
| 4 | 165 | 20 | 2.5 | LLDPE1 | 23.7 | 8 |
| 5 | 165 | 40 | 2 | LLDPE1 | 23 | 6 |
| 6 | 170 | 40 | 1.5 | LLDPE1 | 18.02 | 2.3 |
| 7 | 170 | 40 | 2.5 | LLDPE1 | 24.6 | 10 |
| 8 | 170 | 20 | 2 | LLDPE1 | 24.66 | 8 |
| 9 | 175 | 20 | 2.5 | LLDPE1 | 20.48 | 10 |

(continued)

| Seal Strength and Seal Score of LLDPE1 Resin | | | | | | |
|---|---|---|---|---|---|---|
| Run | Temperature (°C) | Pressure (psi) | Time (s) | Resin | Average Seal Strength (N) | Seal Score |
| 10 | 175 | 20 | 1.5 | LLDPE1 | 24.36 | 7 |
| 11 | 175 | 40 | 2 | LLDPE1 | 22.46 | 10 |

TABLE 4

| Seal Strength and Seal Score of LLDPE2 Resin | | | | | | |
|---|---|---|---|---|---|---|
| Run | Temperature (°C) | Pressure (psi) | Time (s) | Resin | Average Seal Strength (N) | Seal Score |
| 1 | 160 | 40 | 1.5 | LLDPE2 | 7.26 | 0.5 |
| 2 | 160 | 40 | 2.5 | LLDPE2 | 24.68 | 5 |
| 3 | 165 | 20 | 1.5 | LLDPE2 | 8.9 | 0.5 |
| 4 | 165 | 20 | 2.5 | LLDPE2 | 25 | 6 |
| 5 | 165 | 40 | 2 | LLDPE2 | 22.54 | 5 |
| 6 | 170 | 40 | 1.5 | LLDPE2 | 22.54 | 8 |
| 7 | 170 | 40 | 2.5 | LLDPE2 | 22.96 | 10 |
| 8 | 170 | 20 | 2 | LLDPE2 | 23.5 | 5 |
| 9 | 175 | 20 | 2.5 | LLDPE2 | 21.08 | 10 |
| 10 | 175 | 20 | 1.5 | LLDPE2 | 22.36 | 5 |
| 11 | 175 | 40 | 2 | LLDPE2 | 23.34 | 10 |

TABLE 5

| Seal Strength and Seal Score of HDPE2 Resin | | | | | | |
|---|---|---|---|---|---|---|
| Run | Temperature (°C) | Pressure (psi) | Time (s) | Resin | Average Seal Strength (N) | Seal Score |
| 1 | 160 | 40 | 1.5 | HDPE2 | 1.22 | 0.5 |
| 2 | 160 | 40 | 2.5 | HDPE2 | 4.92 | 0.5 |
| 3 | 165 | 20 | 1.5 | HDPE2 | 2.7 | 0.5 |
| 4 | 165 | 20 | 2.5 | HDPE2 | 14.94 | 0.5 |
| 5 | 165 | 40 | 2 | HDPE2 | 8.7 | 0.5 |
| 6 | 170 | 40 | 1.5 | HDPE2 | 7.12 | 0.5 |
| 7 | 170 | 40 | 2.5 | HDPE2 | 15.66 | 2.4 |
| 8 | 170 | 20 | 2 | HDPE2 | 12.1 | 0.5 |
| 9 | 175 | 20 | 2.5 | HDPE2 | 19.34 | 8 |
| 10 | 175 | 20 | 1.5 | HDPE2 | 9.34 | 0.5 |
| 11 | 175 | 40 | 2 | HDPE2 | 17.8 | 8 |

TABLE 6

| Seal Strength and Seal Score of SCLAIR HDPE1 Resin | | | | | | |
|---|---|---|---|---|---|---|
| Run | Temperature (°C) | Pressure (psi) | Time (s) | Resin | Average Seal Strength (N) | Seal Score |
| 1 | 160 | 40 | 1.5 | HDPE1 | 1.54 | 0.5 |
| 2 | 160 | 40 | 2.5 | HDPE1 | 7.6 | 0.5 |
| 3 | 165 | 20 | 1.5 | HDPE1 | 1.7 | 0.5 |

(continued)

| | Seal Strength and Seal Score of SCLAIR HDPE1 Resin | | | | | |
|---|---|---|---|---|---|---|
| Run | Temperature (°C) | Pressure (psi) | Time (s) | Resin | Average Seal Strength (N) | Seal Score |
| 4 | 165 | 20 | 2.5 | HDPE1 | 8.88 | 0.5 |
| 5 | 165 | 40 | 2 | HDPE1 | 7.94 | 0.5 |
| 6 | 170 | 40 | 1.5 | HDPE1 | 5.5 | 0.5 |
| 7 | 170 | 40 | 2.5 | HDPE1 | 19.04 | 7 |
| 8 | 170 | 20 | 2 | HDPE1 | 15.26 | 0.5 |
| 9 | 175 | 20 | 2.5 | HDPE1 | 19.74 | 10 |
| 10 | 175 | 20 | 1.5 | HDPE1 | 10.18 | 0.5 |
| 11 | 175 | 40 | 2 | HDPE1 | 18.4 | 7 |

TABLE 7

| | Seal Strength and Seal Score of sLLDPE4 Resin | | | | | |
|---|---|---|---|---|---|---|
| Run | Temperature (°C) | Pressure (psi) | Time (s) | Resin | Average Seal Strength (N) | Seal Score |
| 1 | 160 | 40 | 1.5 | sLLDPE4 | 19.4 | 3.2 |
| 2 | 160 | 40 | 2.5 | sLLDPE4 | 28.6 | 6 |
| 3 | 165 | 20 | 1.5 | sLLDPE4 | 27.5 | 5 |
| 4 | 165 | 20 | 2.5 | sLLDPE4 | 27 | 8 |
| 5 | 165 | 40 | 2 | sLLDPE4 | 30.1 | 6 |
| 6 | 170 | 40 | 1.5 | sLLDPE4 | 29.3 | 7 |
| 7 | 170 | 40 | 2.5 | sLLDPE4 | 27.2 | 10 |
| 8 | 170 | 20 | 2 | sLLDPE4 | 28.2 | 9 |
| 9 | 175 | 20 | 2.5 | sLLDPE4 | 30 | 10 |
| 10 | 175 | 20 | 1.5 | sLLDPE4 | 31.3 | 6 |
| 11 | 175 | 40 | 2 | sLLDPE4 | 28.4 | 9 |

TABLE 8

| | Seal Strength and Seal Score of sLLDPE3 Resin | | | | | |
|---|---|---|---|---|---|---|
| Run | Temperature (°C) | Pressure (psi) | Time (s) | Resin | Average Seal Strength (N) | Seal Score |
| 1 | 160 | 40 | 1.5 | sLLDPE3 | 21.5 | 5 |
| 2 | 160 | 40 | 2.5 | sLLDPE3 | 30.04 | 7 |
| 3 | 165 | 20 | 1.5 | sLLDPE3 | 26.54 | 5 |
| 4 | 165 | 20 | 2.5 | sLLDPE3 | 28.24 | 9 |
| 5 | 165 | 40 | 2 | sLLDPE3 | 29.74 | 6 |
| 6 | 170 | 40 | 1.5 | sLLDPE3 | 27.94 | 7 |
| 7 | 170 | 40 | 2.5 | sLLDPE3 | 27.5 | 9 |
| 8 | 170 | 20 | 2 | sLLDPE3 | 29.22 | 8 |
| 9 | 175 | 20 | 2.5 | sLLDPE3 | 28.72 | 10 |
| 10 | 175 | 20 | 1.5 | sLLDPE3 | 30.58 | 7 |
| 11 | 175 | 40 | 2 | sLLDPE3 | 26.64 | 10 |

TABLE 9

| | | | | | Seal Strength and Seal Score of sLLDPE1 Resin | | |
| --- | --- | --- | --- | --- | --- | --- | --- |
| Run | Temperature (°C) | Pressure (psi) | Time (s) | Resin | Average Seal Strength (N) | Seal Score |
| 1 | 160 | 40 | 1.5 | sLLDPE1 | 28.12 | 7 |
| 2 | 160 | 40 | 2.5 | sLLDPE1 | 32.18 | 9 |
| 3 | 165 | 20 | 1.5 | sLLDPE1 | 32.04 | 5 |
| 4 | 165 | 20 | 2.5 | sLLDPE1 | 29.1 | 10 |
| 5 | 165 | 40 | 2 | sLLDPE1 | 35.92 | 7 |
| 6 | 170 | 40 | 1.5 | sLLDPE1 | 31.7 | 7 |
| 7 | 170 | 40 | 2.5 | sLLDPE1 | 29.56 | 7 |
| 8 | 170 | 20 | 2 | sLLDPE1 | 32.12 | 8 |
| 9 | 175 | 20 | 2.5 | sLLDPE1 | 29.54 | 7 |
| 10 | 175 | 20 | 1.5 | sLLDPE1 | 31.025 | 9 |
| 11 | 175 | 40 | 2 | sLLDPE1 | 30.18 | 10 |

TABLE 10

| | | | | | Seal strength and Seal score of sLLDPE2 resin | | |
| --- | --- | --- | --- | --- | --- | --- | --- |
| Run | Temperature (°C) | Pressure (psi) | Time (s) | Resin | Average Seal Strength (N) | Seal Score |
| 1 | 160 | 40 | 1.5 | sLLDPE2 | 23.56 | 3.2 |
| 2 | 160 | 40 | 2.5 | sLLDPE2 | 30.26 | 9 |
| 3 | 165 | 20 | 1.5 | sLLDPE2 | 23.92 | 4.2 |
| 4 | 165 | 20 | 2.5 | sLLDPE2 | 32.32 | 9 |
| 5 | 165 | 40 | 2 | sLLDPE2 | 30.4 | 9 |
| 6 | 170 | 40 | 1.5 | sLLDPE2 | 28.68 | 6 |
| 7 | 170 | 40 | 2.5 | sLLDPE2 | 29.86 | 10 |
| 8 | 170 | 20 | 2 | sLLDPE2 | 32.52 | 9 |
| 9 | 175 | 20 | 2.5 | sLLDPE2 | 30.06 | 10 |
| 10 | 175 | 20 | 1.5 | sLLDPE2 | 35.8 | 5 |
| 11 | 175 | 40 | 2 | sLLDPE2 | 30.02 | 10 |

The data from the Inventive Experiments Part 2 were obtained from a set of designed experiments. This allowed the data to be used to model some "surface response maps" to describe the expected seal behavior between the fitment and the film under different sealing conditions.

Some comparative experiments were also performed using the same multilayer flexible film as used in the inventive experiments. Attempts were made to seal this film to flat plaques made from two different HDPEs (one HDPE, sold under the name SCLAIR 2710 had a melt index, $I_2$ of 17.2 and a density of 0.95 g/cc; the other HDPE had an $I_2$ of 51 and a density of 0.95). It will be appreciated that it is easy to form a seal between a film and a flat plaque (in comparison to a curved fitment). However, it was observed that only very weak seals were formed between the flexible multilayer film and plaques made from these HDPEs.

INDUSTRIAL APPLICABILITY

The packages of this invention are suitable for a wide variety of flowable products, especially liquids such as drinks. The packages may be more easily recycled than similar packages that are prepared with a mixture of polymers.

**Claims**

1. A flexible package comprising

   A) a multilayer film comprising

   a) a first skin layer consisting of from 85 to 100 weight% of a high density polyethylene having a density of from 0.95 to 0.97 g/cc and a melt index, $I_2$, (obtained by ASTM D 1238 (when conducted at 190°C, using a 2.16 kg weight), of from 0.5 to 10 g/10 minutes;
   b) a second skin layer consisting of from 85 to 100 weight % of a first linear low density interpolymer having a molecular weight distribution Mw/Mn (determined according to ASTM D 6474-99) of from 2 to 4, a density of from 0.88 to 0.92 g/cc and a melt index, $I_2$, of from 0.3 to 5 g/10 minutes;
   c) a core comprising polyethylene,

   with the proviso that the polymeric material used to prepare said multilayer film is at least 90% by weight polyethylene; and
   B) a fitment that is prepared from linear low density polyethylene having a density of from 0.91 to 0.93 g/cc.

2. The flexible package of claim 1 wherein said core comprises linear polyethylene having density of from 0.91 to 0.94 g/cc and a melt index, $I_2$, of from 0.5 to 10 g/10 minutes.

3. The flexible package of claim 1 wherein said core contains a layer of EVOH, with the proviso that the weight of said EVOH is from 0.5 to 8 weight % of the total weight of polymeric material used to prepare said multilayer film.

4. The flexible package of claim 3 wherein said second skin layer has a density of from 0.905 to 0.917 g/cc.

5. The flexible package of claim 1 having from 3 to 11 layers.

6. The flexible package of claim 1 wherein said first linear low density polyethylene has a molecular weight distribution, Mw/Mn, of from 2.5 to 4.0 and a Dilution Index, Yd, (determined using the method disclosed in section B.4) of greater than 0.

7. The flexible package of claim 6 wherein said first linear low density interpolymer is synthesized in a multi reactor polymerization system using at least one single site catalyst formulation and at least one heterogeneous catalyst formulation.

8. The flexible package of claim 1 wherein said fitment is prepared from linear low density polyethylene having a melt index, $I_2$, of from 0.2 to 20 grams/10 minutes.

9. The flexible package of claim 1 wherein said fitment is made from linear low density polyethylene having a dilution index, Yd, of from greater than 0 to 7.

10. The flexible package of claim 1 wherein the multilayered film is:

    a) a laminated film; or
    b) prepared by a coextrusion process.

11. A process to make a flexible package comprising

    A) a multilayer film comprising

    a) a first skin layer consisting of from 85 to 100 weight% of a high density polyethylene having a density of from 0.95 to 0.97 g/cc and a melt index, $I_2$, (obtained by ASTM D 1238 (when conducted at 190°C, using a 2.16 kg weight), of from 0.5 to 10 g/10 minutes;
    b) a second skin layer consisting of from 85 to 100 weight % of a first linear low density interpolymer having a molecular weight distribution, Mw/Mn (determined according to ASTM D 6474-99) of from 2 to 4, a density of from 0.88 to 0.92 g/cc and a melt index, $I_2$, of from 0.3 to 5 g/10 minutes;
    c) a core comprising polyethylene,

with the proviso that the polymeric material used to prepare said multilayer film is at least 90% by weight polyethylene; and
B) a fitment that is prepared from linear low density polyethylene having a density of from 0.91 to 0.93 g/cc,

wherein the process comprises heat sealing the multilayer film to the fitment.

12. The process of claim 11 wherein said first linear low density polyethylene has a molecular weight distribution, Mw/Mn, of from 2.5 to 4.0 and a Dilution Index, Yd, (determined using the method disclosed in section B.4) of greater than 0.

13. The process of claim 11 wherein said fitment is prepared from linear low density polyethylene having a melt index, $I_2$, of from 0.2 to 20 grams/10 minutes.

**Patentansprüche**

1. Flexible Verpackung, die Folgendes umfasst:

A) eine mehrschichtige Folie, die Folgendes umfasst:

a) eine erste Außenschicht, die aus 85 bis 100 Gew.-% eines Polyethylens hoher Dichte mit einer Dichte von 0,95 bis 0,97 g/cm$^3$ und einem Schmelzindex $I_2$ (erhalten gemäß ASTM D 1238 bei Durchführung bei 190°C unter Verwendung eines Gewichts von 2,16 kg) von 0,5 bis 10 g/10 min besteht,
b) eine zweite Außenschicht, die aus 85 bis 100 Gew.-% eines ersten unverzweigten Interpolymers geringer Dichte mit einer Molekulargewichtsverteilung Mw/Mn (bestimmt gemäß ASTM D 6474-99) von 2 bis 4, einer Dichte von 0,88 bis 0,92 g/cm$^3$ und einem Schmelzindex $I_2$ von 0,3 bis 5 g/10 min besteht,
c) einen Kern, der Polyethylen umfasst,

mit der Maßgabe, dass das zur Herstellung der mehrschichtigen Folie verwendete Polymermaterial aus zumindest 90 Gew.-% Polyethylen besteht; und
B) einen Einsatz, der aus einem unverzweigten Polyethylen geringer Dichte mit einer Dichte von 0,91 bis 0,93 g/cm$^3$ besteht.

2. Flexible Verpackung nach Anspruch 1, wobei der Kern unverzweigtes Polyethylen mit einer Dichte von 0,91 bis 0,94 g/cm$^3$ und einem Schmelzindex $I_2$ von 0,5 bis 10 g/10 min umfasst.

3. Flexible Verpackung nach Anspruch 1, wobei der Kern eine Schicht aus EVOH umfasst, mit der Maßgabe, dass das Gewicht des EVOH 0,5 bis 8 Gew.-% des Gesamtgewichts des Polymermaterials beträgt, das zur Herstellung der mehrschichtigen Folie verwendet wird.

4. Flexible Verpackung nach Anspruch 3, wobei die zweite Außenschicht eine Dichte von 0,905 bis 0,917 g/cm$^3$ aufweist.

5. Flexible Verpackung nach Anspruch 1, die 3 bis 11 Schichten aufweist.

6. Flexible Verpackung nach Anspruch 1, wobei das erste unverzweigte Polyethylen geringer Dichte eine Molekulargewichtsverteilung Mw/Mn von 2,5 bis 4,0 und einen Verdünnungsindex Yd (bestimmt gemäß dem in Abschnitt B.4 beschriebenen Verfahren) von mehr als 0 aufweist.

7. Flexible Verpackung nach Anspruch 6, wobei das erste unverzweigte Interpolymer geringer Dichte in einem Multireaktor-Polymerisationssystem unter Verwendung zumindest einer Single-Site-Katalysator-Formulierung und zumindest einer heterogenen Katalysator-Formulierung synthetisiert ist.

8. Flexible Verpackung nach Anspruch 1, wobei der Einsatz aus unverzweigtem Polyethylen geringer Dichte mit einem Schmelzindex $I_2$ von 0,2 bis 20 g/10 min hergestellt ist.

9. Flexible Verpackung nach Anspruch 1, wobei der Einsatz aus unverzweigtem Polyethylen geringer Dichte mit einem Verdünnungsindex Yd von mehr als 0 bis 7 besteht.

**10.** Flexible Verpackung nach Anspruch 1, wobei die mehrschichtige Folie Folgendes ist:

a) eine Laminatfolie oder
b) durch ein Koextrusionsverfahren hergestellt.

**11.** Verfahren zur Herstellung einer flexiblen Verpackung, die Folgendes umfasst:

A) eine mehrschichtige Folie, die Folgendes umfasst:

a) eine erste Außenschicht, die aus 85 bis 100 Gew.-% eines Polyethylens hoher Dichte mit einer Dichte von 0,95 bis 0,97 g/cm$^3$ und einem Schmelzindex $I_2$ (erhalten gemäß ASTM D 1238 bei Durchführung bei 190°C unter Verwendung eines Gewichts von 2,16 kg) von 0,5 bis 10 g/10 min besteht,
b) eine zweite Außenschicht, die aus 85 bis 100 Gew.-% eines ersten unverzweigten Interpolymers geringer Dichte mit einer Molekulargewichtsverteilung Mw/Mn (bestimmt gemäß ASTM D 6474-99) von 2 bis 4, einer Dichte von 0,88 bis 0,92 g/cm$^3$ und einem Schmelzindex $I_2$ von 0,3 bis 5 g/10 min besteht,
c) einen Kern, der Polyethylen umfasst,

mit der Maßgabe, dass das zur Herstellung der mehrschichtigen Folie verwendete Polymermaterial aus zumindest 90 Gew.-% Polyethylen besteht; und
B) einen Einsatz, der aus einem unverzweigten Polyethylen geringer Dichte mit einer Dichte von 0,91 bis 0,93 g/cm$^3$ besteht;

wobei das Verfahren das Heißverkleben der mehrschichtigen Folie mit dem Einsatz umfasst.

**12.** Verfahren nach Anspruch 11, wobei das erste unverzweigte Polyethylen geringer Dichte eine Molekulargewichtsverteilung Mw/Mn von 2,5 bis 4,0 und einen Verdünnungsindex Yd (bestimmt gemäß dem in Abschnitt B.4 beschriebenen Verfahren) von mehr als 0 aufweist.

**13.** Verfahren nach Anspruch 11, wobei der Einsatz aus unverzweigtem Polyethylen geringer Dichte mit einem Schmelzindex $I_2$ von 0,2 bis 20 g/10 min hergestellt ist.

**Revendications**

**1.** Emballage souple, comprenant

A) un film multicouche, comprenant

a) une première couche de peau constituée de 85 à 100 % en poids d'un polyéthylène haute densité présentant une densité de 0,95 à 0,97 g/cc et un indice de fluidité à chaud, 12, (obtenu par ASTM D 1238 (lors d'une mise en œuvre à 190°C en utilisant un poids de 2,16 kg), de 0,5 à 10 g/10 minutes ;
b) une seconde couche de peau constituée de 85 à 100 % en poids d'un premier interpolymère linéaire basse densité présentant une distribution de poids moléculaire Mw/Mn (déterminée selon ASTM D 6474-99) de 2 à 4, une densité de 0,88 à 0,92 g/cc et un indice de fluidité à chaud, 12, de 0,3 à 5 g/10 minutes ;
c) un noyau comprenant du polyéthylène,

à condition que le matériau polymère utilisé pour préparer ledit film multicouche soit du polyéthylène pour au moins 90 % en poids ; et
B) un accessoire qui est préparé à partir de polyéthylène linéaire basse densité présentant une densité de 0,91 à 0,93 g/cc.

**2.** Emballage souple selon la revendication 1, dans lequel ledit noyau comprend du polyéthylène linéaire ayant une densité de 0,91 à 0,94 g/cc et un indice de fluidité à chaud, 12, de 0,5 à 10 g/10 minutes.

**3.** Emballage souple selon la revendication 1, dans lequel ledit noyau contient une couche d'EVOH, à condition que le poids dudit EVOH représente de 0,5 à 8 % en poids du poids total du matériau polymère utilisé pour préparer ledit film multicouche.

**4.** Emballage souple selon la revendication 3, dans lequel ladite seconde couche de peau présente une densité de 0,905 à 0,917 g/cc.

**5.** Emballage souple selon la revendication 1, présentant de 3 à 11 couches.

**6.** Emballage souple selon la revendication 1, dans lequel ledit premier polyéthylène linéaire basse densité présente une distribution de poids moléculaire, Mw/Mn, de 2,5 à 4,0 et un indice de dilution, Yd, (déterminé en utilisant le procédé décrit dans la section B.4) supérieur à 0.

**7.** Emballage souple selon la revendication 6, dans lequel ledit premier interpolymère linéaire basse densité est synthétisé dans un système de polymérisation à réacteurs multiples utilisant au moins une formulation de catalyseur à site unique et au moins une formulation de catalyseur hétérogène.

**8.** Emballage souple selon la revendication 1, dans lequel ledit accessoire est préparé à partir de polyéthylène basse densité linéaire présentant un indice de fluidité à chaud, 12, de 0,2 à 20 grammes/10 minutes.

**9.** Emballage souple selon la revendication 1, dans lequel ledit accessoire est fabriqué à partir de polyéthylène basse densité linéaire présentant un indice de dilution, Yd, supérieur à 0 à 7.

**10.** Emballage souple selon la revendication 1, dans lequel le film multicouche est :

a) un film stratifié ; ou
b) préparé par un processus de coextrusion.

**11.** Procédé de fabrication d'un emballage souple comprenant

A) un film multicouche, comprenant

a) une première couche de peau constituée de 85 à 100 % en poids d'un polyéthylène haute densité présentant une densité de 0,95 à 0,97 g/cc et un indice de fluidité à chaud, 12, (obtenu par ASTM D 1238 (lors d'une mise en œuvre à 190°C en utilisant un poids de 2,16 kg), de 0,5 à 10 g/10 minutes ;
b) une seconde couche de peau constituée de 85 à 100 % en poids d'un premier interpolymère linéaire basse densité présentant une distribution de poids moléculaire, Mw/Mn (déterminée selon ASTM D 6474-99) de 2 à 4, une densité de 0,88 à 0,92 g/cc et un indice de fluidité à chaud, 12, de 0,3 à 5 g/10 minutes ;
c) un noyau comprenant du polyéthylène,

à condition que le matériau polymère utilisé pour préparer ledit film multicouche soit du polyéthylène pour au moins 90 % en poids ; et
B) un accessoire qui est préparé à partir de polyéthylène linéaire basse densité présentant une densité de 0,91 à 0,93 g/cc,

dans lequel le procédé comprend le thermosoudage du film multicouche sur l'accessoire.

**12.** Procédé selon la revendication 11, dans lequel ledit premier polyéthylène linéaire basse densité présente une distribution de poids moléculaire, Mw/Mn, de 2,5 à 4,0 et un indice de dilution, Yd, (déterminé en utilisant le procédé décrit dans la section B.4) supérieur à 0.

**13.** Procédé selon la revendication 11, dans lequel ledit accessoire est préparé à partir de polyéthylène linéaire basse densité présentant un indice de fluidité à chaud, 12, de 0,2 à 20 grammes/10 minutes.

FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017058634 A1
- US 20160229157 A, R.H. Clare
- US 5981636 A
- US 6465551 B, Zhao
- US 6599971 B, Dotson
- US 5342868 A
- US 7737220 B, Swabey
- US 9963270 B
- US 9957148 B
- US 9771174 B
- US 9688447 B
- US 8613548 B
- US 9635965 B
- US 9512282 B, Li
- US 10035906 B
- US 5089321 A, Chum

### Non-patent literature cited in the description

- *CHEMICAL ABSTRACTS*, 491589-22-1